(19)

Europäisches
Patentamt
European
Patent Office
Office européen
des brevets

(11) **EP 3 296 924 A1**

(12) **EUROPEAN PATENT APPLICATION**

(43) Date of publication:
**21.03.2018 Bulletin 2018/12**

(51) Int Cl.:
**G06K 9/00** *(2006.01)*      **G06F 17/30** *(2006.01)*

(21) Application number: **17190120.0**

(22) Date of filing: **08.09.2017**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **09.09.2016   GB 201615374**

(71) Applicant: **Snell Advanced Media Limited
Newbury
Berkshire RG14 2NX (GB)**

(72) Inventors:
• **KNEE, Michael James
Petersfield, Hampshire GU31 4JN (GB)**
• **PIRODDI, Roberta
Wallasey, Cheshire CH45 0JP (GB)**

(74) Representative: **Garratt, Peter Douglas
Mathys & Squire LLP
The Shard
32 London Bridge Street
London SE1 9SG (GB)**

(54) **METHOD AND APPARATUS FOR ORDERING IMAGES**

(57)    A method, video apparatus, system and computer program product are disclosed. The method is for re-ordering images in a set of images. The method comprises measuring for each image a feature value for each of a plurality of image features and determining over the set of images a correlation measure representing for at least some combinations of the image features the correlation in the respective feature values. The method then includes selecting in accordance with said correlation measure at least one closely correlated combination of image features and ordering the set of images in accordance with those closely correlated combinations of image features.

Figure 3

**Description**

This invention relates to apparatus and methods for analysing a set of images in order to arrange them based on the content of the images.

Linear playback of a sequence is well known. With traditional physical recording media such as tape or DVD, playback is performed by a dedicated device such as a tape player, controlled by buttons which perform well-known functions such as Play, Pause, Stop, Rewind and Fast Forward. Some playback devices have more sophisticated control functions such as Jog and Shuttle, controlled by a knob which allows fast access to, and detailed frame-by-frame viewing of, different parts of the recorded content.

In order to graphically show a set of images that comprise a video sequence the set of images is normally arranged in chronological order so that the first image shown is the first image from the linear sequence, the next image shown from the set is the second image in the sequence, until the final image in the sequence is shown. Variants of this arrangement include identifying the key images in a set of images and showing these chronologically.

In one embodiment, a method for performing analysis on a set of images is provided. This method may comprise measuring, for each image, a feature value for each of a plurality of image features and determining over the set of images a correlation measure representing for at least some combinations of the image features the correlation in the respective feature values. This may be followed by selecting, in accordance with said correlation measure, at least one closely correlated combination of image features and ordering the set of images in accordance with those closely correlated combinations of image features.

The inventor has recognized that the prior art visualization methods described above have the limitation that the organization of the content is related only to the temporal position of frames within the sequence. In other words, the condition for frames to be close together in the visualization is that they be close together in time in the sequence itself. For some sets of images this known arrangement works well, however for others it is not an optimal solution. There is further described below techniques which allow the images from a set to be arranged not merely in chronological order but in an order based on features of the content of each image.

The invention will now be described by way of example with reference to the accompanying drawings, in which:

Figure 1 shows a set of images that are displayed in chronological order.

Figure 2 shows the key images from a set of images, where the key images are shown in chronological order.

Figure 3 shows a flow diagram detailing how the set of images could be ordered based on the features of each image.

Figure 4 is a diagram of an apparatus that may be used to order the images based on the features of each image.

Figure 5 shows a flow diagram detailing one embodiment of Figure 3, with a method for implementing the flow diagram of Figure 3 using various analytical steps.

Figure 6 shows a flow diagram detailing how a subset of the set of images may be used to arrange the images.

Figure 7 is a diagram of an apparatus that may be used to order the images based on the features of a subset of said images.

Figure 8 shows a possible arrangement of a set of images based on the features of each image.

Figure 9 shows a possible arrangement of a set of images based on the features of each image, where a subset of the images has been selected to be more heavily weighted.

Figure 10 shows a device configured to perform the methods described throughout the description.

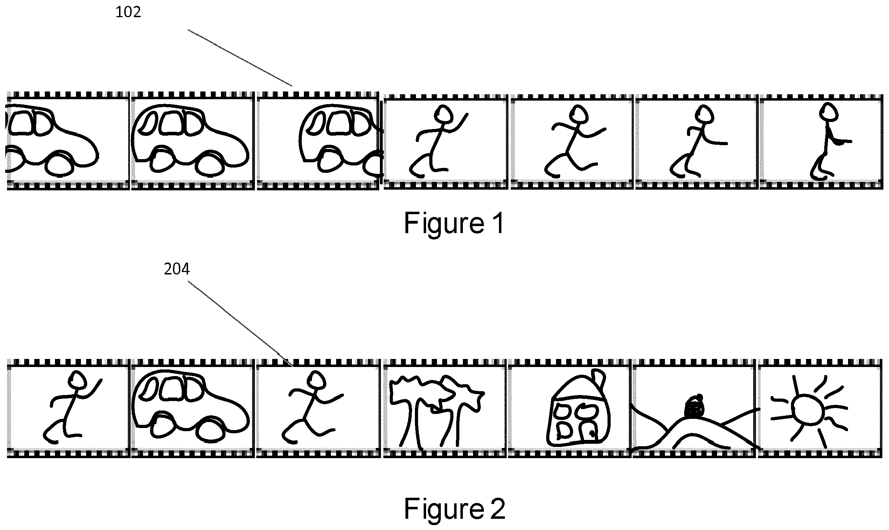

Figure 1 shows a visualisation of images 102 from an image set. The advent of software-controlled video editing and playback systems has made possible further improvements in the way in which content is visualized. A common feature of software user interfaces for such systems is a "filmstrip" visualization in which small "thumbnail" images are arranged in one or more strips, each typically containing 10-20 consecutive thumbnail images from the sequence, so that the user can see the current frame of the sequence in context. An example of such a representation is given in Figure 1. The thumbnails shown are each derived from images from the video sequence. The film strip 102 may instead be comprised of these video sequence images, rather than the associated thumbnails.

The filmstrip visualisation is in chronological order, and this allows the user to scroll through the entire sequence of images from the image set in order to find a desired image, or section of images.

An alternative to this embodiment is shown in Figure 2. In Figure 2 only the key images from the image set are shown 204. These are shown chronologically so that from these images the user can extract information about the entire sequence.

However, both Figures 1 and 2 are chronological visualisations of the image set. Not all video content is best visualised in this way. For example, footage of a conversation between two people may contain alternating close-up scenes of the faces of the two interlocutors, drama series may show several shots from the same location and twenty-four-hour news channels will repeat the same clips periodically throughout the day. These, and other examples, are not best shown chronologically because of the repetitive nature of the images.

These repetitions of content are used by the viewer to build a semantic model of what is seen: to make sense of the things that are seen, to concentrate on the important aspects and to filter out superfluous information. A human observer will establish links and will group scenes according to their visual appearance. Search engines rely on establishing and retrieving connections and relationships between data. Non-linear visual representations of textual information, such as "mind maps" or "word clouds" are often used successfully in many schemes for visualization of a variety of information.

The present invention extends the above principles of non-linear grouping of types of information to video data.

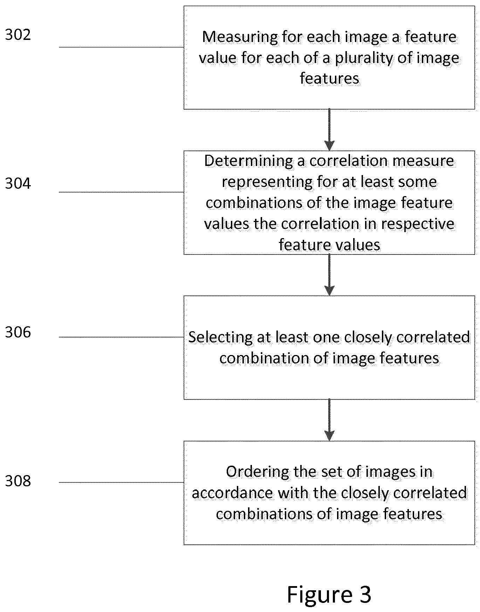

Figure 3 illustrates a flow diagram showing one embodiment of the present invention. Figure 3 shows four steps. Step 302 is to measure a feature value for each of a plurality of image features for each image. Step 304 is to determine a correlation measure representing at least some combinations of the image feature values. Step 306 is to select at least one closely correlated combination of features. Step 308 is to order the images in accordance with the closely correlated features.

These steps combine to create one embodiment of performing analysis on a set of images to identify features which are most closely correlated, and then arranging or ordering the set of images in accordance with those closely correlated features.

The step of measuring a feature value for each image 302 comprises calculating a series of features values for each image feature of each image. These feature values form a feature vector. A feature vector is a multidimensional quantity consisting of measurable features of an image. For example, such image features may include the average luminance level, average red, blue or green level, the proportion of the picture occupied by defined colours such as flesh tones, the standard deviation of pixel level such as luminance, the average level of detail such as horizontal or vertical detail, the average speed of motion between the current image and previous or next image, the estimated quantity of text present in the image, the volume or loudness of associated audio, the time stamp or frame number of the image. Alternatively any other measurable feature of the image may be included. By calculating a feature vector including at least two features the values of the features for each image can be analysed, as can the relationship between the features across all of the images from the set.

Determining a correlation measure 304 comprises analysing the feature values, or feature vectors, for each image and the relationship between the features. This allows correlations between the features (and between combinations of features) to be found. For example, in an action sequence from an action movie it would be expected that the sound associated with an image in the action sequence would be loud, and the average speed of motion between the current image and the previous image would be high. It would therefore be expected that these features would correlate well in this section of the movie. In a video of a sunrise the set of images would be expected be brighter as the sun rises. Therefore in this example average luminescence of each image will likely increase as the time, or image number, of each image increases. By detecting the features, or combinations of features, that are most correlated an image sequence can be characterised.

Selecting at least one closely correlated combination of image features 306 comprises using the correlation measure to find combinations of image features that are closely correlated. One or more of these may then be selected. For example, it may be advantageous to use two combinations of features (especially for a two dimensional map of images). The highest two combination values (or the highest two combinations that fulfil a user specified criteria) may then be selected.

Ordering the images in accordance with the closely correlated features 308 comprises using the determined most correlated features (or combinations of features) to place each image on a two or three dimensional map.

In one example the sunrise and the action sequence described above may be spliced together to form a single set of images. The sunrise has a high correlation between time and average luminescence, whilst the action sequence has a high correlation between speed and sound level. Therefore these may be the combinations of features that are determined to be most closely correlated across the set of images 304. They may then be selected as the closely correlated combinations of features 306. A combination of both of these pairs of features may be determined for each image of the set. The combination values may then be used to determine where each image should be placed on a two or three dimensional map 308. In this example it is likely the sunrise images will be grouped together because the value of the time and average luminescence combination will be high, and the action sequence images will be grouped together because the speed and sound level combination value will be high. Therefore the map will separate out the unrelated sections of the set of images from one another. There may be a non-linear mapping between the values of the combinations and the placement on the map. For example, clusters of images with similar values may be spread out slightly, whilst large gaps between groupings may be narrowed so that the images can be scaled to an appropriate size, and so that the map is easy to use. There may be an overlap between certain images that are close to one another on a map. In another example, the overlapping could be restricted to images whose features were close to one another in the original image set, and a degree of positional adjustment could be applied to groups of overlapping images so that the different groups could be viewed separately. Alternatively, overlapping could be reduced or avoided altogether by choosing to display only key images from each scene in the sequence are displayed.

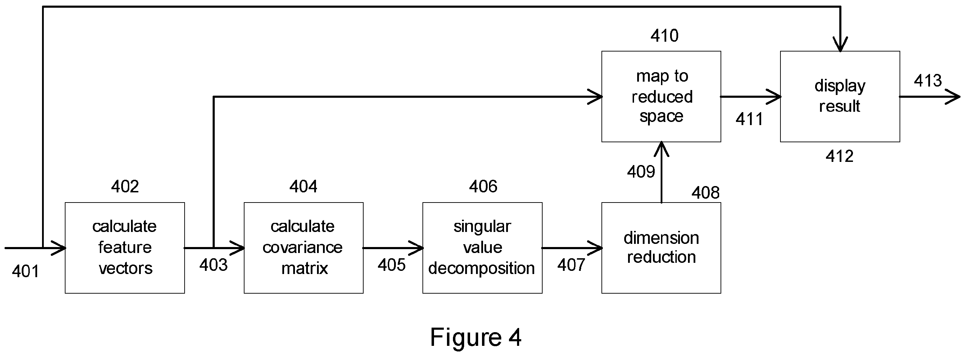

Figure 4 shows an exemplary apparatus that may be used to order the images on a map. Each block may correspond to individual circuitry designed to perform the displayed function. Alternatively one or more blocks may be performed by a single piece of hardware. In some embodiments one or more processors combine to perform each step (aside from displaying the result). In this example the images enter the apparatus (as a data stream) at 401. From the images the feature vectors can then be calculated in circuit 402. A covariance matrix can then be calculated by hardware element 404. Singular value decomposition can be performed on the covariance matrix by further hardware element 406. The dimensions of the resulting matrices of the decomposition may then be reduced (for example, to the dimensions corresponding with the closest correlation) in circuit 408. Element 410 may then be used to map the feature vectors 403 based on the reduced matrices. The result may be displayed on a monitor, projector, television or other display device 412. The display device is sent the map in reduced space and the images 401.

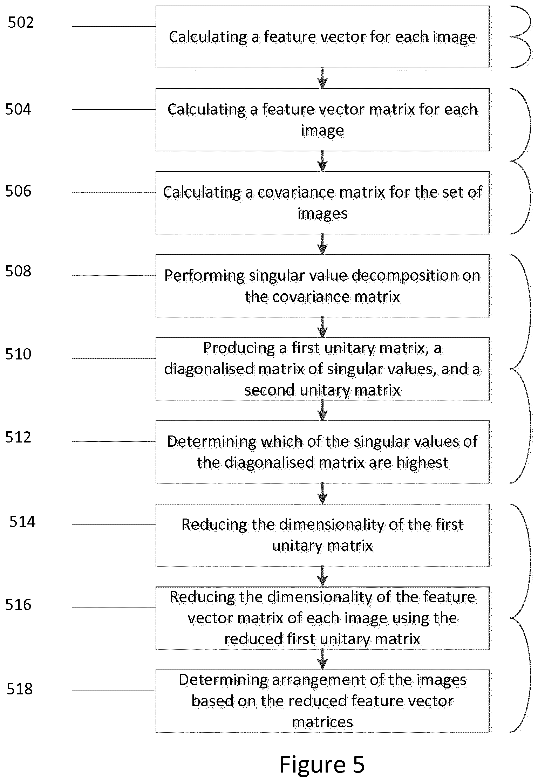

Figure 5 shows an embodiment of Figure 3. In Figure 5 the exemplary analytic steps are shown that in some embodiments allow the steps of Figure 3 to be performed. The steps shown in Figure 5 however are purely exemplary and may be amended, deleted, or added to. There are many ways of performing the method of Figure 3, and this is just one of many contemplated implementations.

Step 502 of calculating a feature vector for each image is one embodiment of measuring a feature value for each feature for each image 302, which is described above.

Steps 504 and 506 together may comprise the steps to perform step 304 of Figure 3. The first of these, step 504 is to calculate a feature vector matrix for each image. This involves calculating every possible combination of pairs of features from the feature vector for each image.

Step 506 describes calculating a covariance matrix for the entire set of images. This may comprise averaging the value of each combination of features across all of the images and associated feature vector matrices. Alternatively a covariance matrix may be calculated straight from the feature vectors associated with each image. A covariance matrix is shown below where C is the covariance matrix, n is the number of features, $x_{ij}$, from feature-vector matrix, is the value of feature $j$ in picture i, and $\langle \rangle$ is an averaging operation across the sequence. Each element of the covariance matrix (305) indicates the correlation between a different pair of features.

$$
C \equiv \begin{pmatrix} c_{0\,0} & \cdots & c_{0\,n-1} \\ \vdots & \ddots & \vdots \\ c_{n-1\,0} & \cdots & c_{n-1\,n-1} \end{pmatrix} = \begin{pmatrix} \langle x_{i\,0} x_{i\,0} \rangle & \cdots & \langle x_{i\,0} x_{i\,n-1} \rangle \\ \vdots & \ddots & \vdots \\ \langle x_{i\,n-1} x_{i\,0} \rangle & \cdots & \langle x_{i\,n-1} x_{i\,n-1} \rangle \end{pmatrix}
$$

Steps 508, 510 and 512 together may comprise the step 306 of Figure 3. Step 508 is to perform a singular value decomposition on the covariance matrix. Singular value decomposition is a known technique for decomposing a matrix into a product of three matrices, the central one of which is a diagonal matrix. The resulting three-matrix representation is described in the following formula:

$$
C = U'W'V'^T
$$

The symmetry of the covariance matrix means that the matrices U' and V' are identical. This use of singular value decomposition on covariance matrix C is shown below:

$$
\begin{pmatrix} c_{0\,0} & \cdots & c_{0\,n-1} \\ \vdots & \ddots & \vdots \\ c_{n-1\,0} & \cdots & c_{n-1\,n-1} \end{pmatrix} = \begin{pmatrix} u'_{0\,0} & \cdots & u'_{0\,n-1} \\ \vdots & \ddots & \vdots \\ u'_{n-1\,0} & \cdots & u'_{n-1\,n-1} \end{pmatrix} \begin{pmatrix} w'_0 & & \\ & \ddots & \\ & & w'_{n-1} \end{pmatrix} \begin{pmatrix} v'_{0\,0} & \cdots & v'_{0\,n-1} \\ \vdots & \ddots & \vdots \\ v'_{n-1\,0} & \cdots & v'_{n-1\,n-1} \end{pmatrix}^T
$$

This produces a first matrix $U'$, a diagonalised matrix $W'$, and a second matrix $V'^T$ 510. This diagonalised matrix is formed of singular values. It can be determined which of these have the highest or largest value 512. This allows the closely correlated feature combinations to be selected 306.

Steps 514, 516 and 518 together may comprise step 308 of Figure 3. Step 514 is to reduce the dimensionality of the matrix. The dimensionality may be reduced, to two, or three, or another pre-set number of dimensions. This is done first by sorting the values in matrix $W$ into descending order, interchanging the corresponding rows and columns in the matrices $U'$ and $V'^T$ so that the columns in matrices $U'$ and $V'^T$ associated with the highest singular value in matrix $W$ are on the left. We then form a reduced matrix $U'_R$ by taking the leftmost two columns of the re-ordered matrix $U'$ 514.

The original feature-vector matrix for each image may then be reduced by applying the following matrix multiplication formula 516:

$$Y' = X U'_R = \begin{pmatrix} x_{0\,0} & \cdots & x_{0\,n-1} \\ \vdots & \ddots & \vdots \\ x_{m-1\,0} & \cdots & x_{m-1\,n-1} \end{pmatrix} \begin{pmatrix} u'_{0\,0} & u'_{0\,1} \\ \vdots & \vdots \\ u'_{n-1\,0} & u'_{n-1\,1} \end{pmatrix}$$

This result can then be used determine the arrangement of the images based on the $Y'$ matrices associated with each image 518.

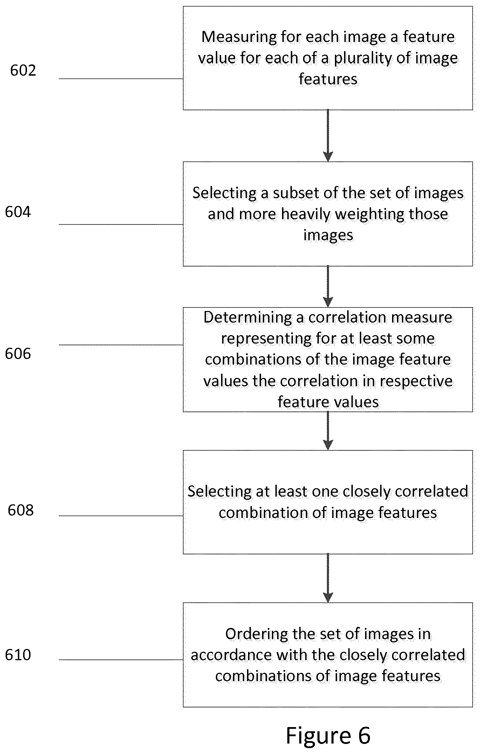

Figure 6 shows a flow diagram, similar to that of Figure 3, adapted to allow a subset of a set of images to be selected. This is shown in step 604. This allows the selected subset of images to be weighted more heavily in the analysis. This means that features that correlate in this section, and in this section only, can be used to arrange the position of the set of images. For example, in a movie there may be only one action sequence that does not last for very long (the images from the action sequence may comprise a small percentage of the total images of the image set). It is unlikely that this sequence alone would influence which features, or combinations of features, are highly correlated. However, this section can be selected so that this section can make a larger difference to the most correlated features. This may have the effect that the images from the selected subsection can be differentiated from each other (it may also have the effect of bunching the unselected images closer together). The subsection may also appear in the middle of the resulting mind map. In some embodiments, only the selected subset of the images is shown on a resulting mind map, however in others all of the images remain, but are weighted according to the features of the selected subset of images.

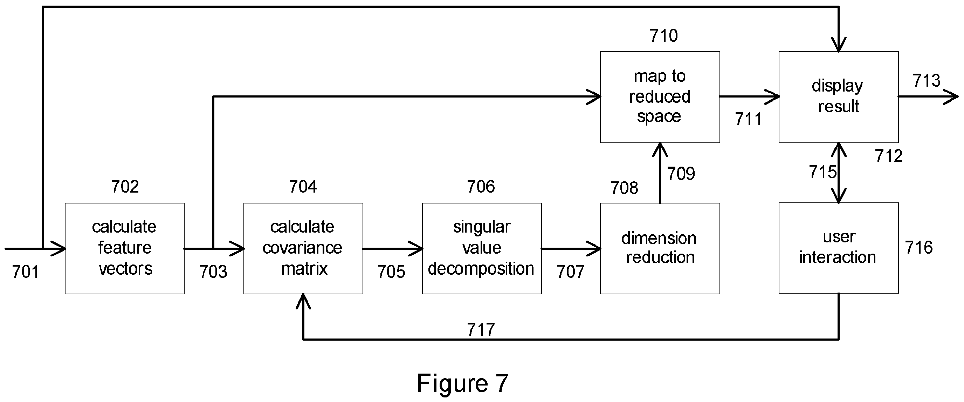

Figure 7 shows an apparatus adapted to allow the user to select a subset of the images. This is shown in block 716. The user can interact with the apparatus and select a subset of the set of images, and these can be used to weight the covariance matrix and hence to influence the features that are selected as being most closely correlated. All of the images from the set may be displayed, or only the subset selected by the user.

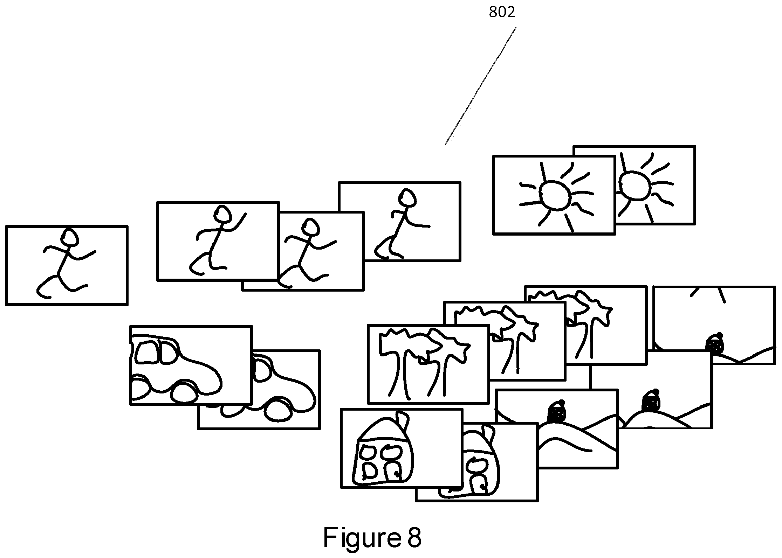

Figure 8 shows an example of a resulting mind map 802 representing a set of images. This shows that rather than the images being shown chronologically, as is the case in prior systems, the images are grouped by the content of the images. This may have been achieved by using the method shown in Figure 3. The images may be thumbnails, where each thumbnail corresponds to a full scale image.

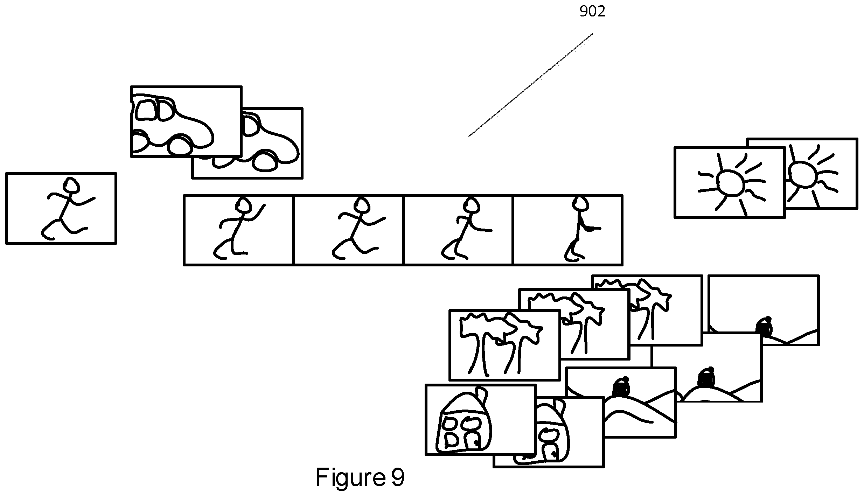

Figure 9 shows an example of a resulting mind map 902 from the use of a subset of images. This may have been achieved by using the method shown in Figure 6. Compared to Figure 8, the use of the subset of images has reorganised the main map so that the stick man is now central on the map, and is more clearly shown, whereas the other images are more closely bunched together.

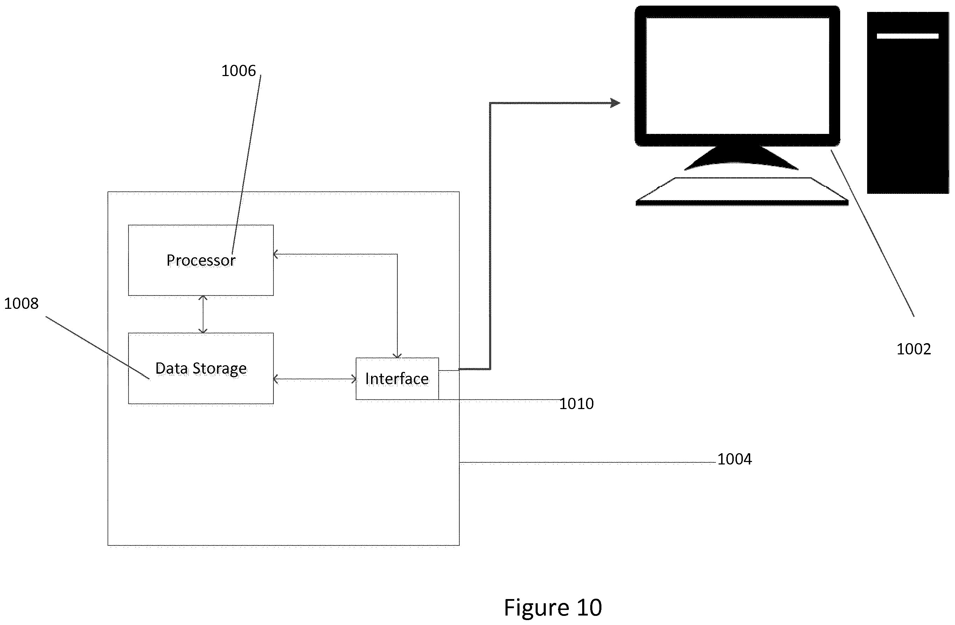

Figure 10 shows a device configured to perform any of the methods described throughout this specification. It is formed of a computation module 1004 and a display module 1002. The computation module is configured to analyse a set of images and then order the images on a map according to the results of the analysis. This may be done as set out in any of the methods described above. The set of images may be stored in a data storage and sent to the processor for processing, or the computational device may receive the set of images from another source. This could be via a connection with an exterior data storage or second computational device. Such a connection may be wireless, or may be a physical connection. Once the map of images has been ordered the map may then be sent to the display device to display. The map may be sent via a display interface, connecting the display device and computational device.

It will be appreciated from the discussion above that the embodiments shown in the Figures are merely exemplary, and include features which may be generalised, removed or replaced as described herein and as set out in the claims. With reference to the drawings in general, it will be appreciated that schematic functional block diagrams are used to indicate functionality of systems and apparatus described herein. For example the steps shown in Figures 3, 5 and 6 may be combined into single steps. These steps may also be performed on a single apparatus, or each step may be performed at a separate apparatus. The apparatus performing the method steps may include a data storage and a processor. Alternatively the functionality provided by the data storage may in whole or in part be provided by the processor. In addition the processing functionality may also be provided by devices which are supported by an electronic device.

It will be appreciated however that the functionality need not be divided in this way, and should not be taken to imply any particular structure of hardware other than that described and claimed below. The function of one or more of the elements shown in the drawings may be further subdivided, and/or distributed throughout apparatus of the disclosure. In some embodiments the function of one or more elements shown in the drawings may be integrated into a single functional unit.

The above embodiments are to be understood as illustrative examples. Further embodiments are envisaged. It is to be understood that any feature described in relation to any one embodiment may be used alone, or in combination with other features described, and may also be used in combination with one or more features of any other of the embodiments, or any combination of any other of the embodiments. Furthermore, equivalents and modifications not described above may also be employed without departing from the scope of the invention, which is defined in the accompanying claims.

In some examples, one or more memory elements can store data and/or program instructions used to implement the operations described herein. Embodiments of the disclosure provide tangible, non-transitory storage media comprising program instructions operable to program a processor to perform any one or more of the methods described and/or claimed herein and/or to provide data processing apparatus as described and/or claimed herein.

The processor of any apparatus used to perform the method steps (and any of the activities and apparatus outlined herein) may be implemented with fixed logic such as assemblies of logic gates or programmable logic such as software and/or computer program instructions executed by a processor. Other kinds of programmable logic include programmable processors, programmable digital logic (e.g., a field programmable gate array (FPGA), an erasable programmable read only memory (EPROM), an electrically erasable programmable read only memory (EEPROM)), an application specific integrated circuit, ASIC, or any other kind of digital logic, software, code, electronic instructions, flash memory, optical disks, CD-ROMs, DVD ROMs, magnetic or optical cards, other types of machine-readable mediums suitable for storing electronic instructions, or any suitable combination thereof.

**Claims**

1.   A method for re-ordering images in a set of images, comprising the steps in a processor of:

measuring for each image a feature value for each of a plurality of image features;
determining over the set of images a correlation measure representing for at least some combinations of the image features the correlation in the respective feature values;
selecting in accordance with said correlation measure at least one closely correlated combination of image features; and
ordering the set of images in accordance with those closely correlated combinations of image features.

2.   The method of claim 1, wherein the step of measuring for each image a feature value for each of the plurality of image features comprises calculating a feature vector for each image from the image set.

3.   The method of claim 2, wherein the step of determining over the set of images a correlation measure comprises calculating a covariance matrix from said feature vectors.

4.   The method of claim 3, wherein the step of selecting at least two closely correlated combinations of image features comprises performing a singular value decomposition on the covariance matrix and selecting the one or more largest elements of the diagonal matrix in the decomposition.

5.   The method of any preceding claim wherein the image features comprise at least two of:

average luminance level;
average red, blue or green level;
proportion of the picture occupied by defined colours such as flesh tones;
standard deviation of pixel level such as luminance;
average level of detail such as horizontal or vertical detail;
average speed of motion between current image and previous or next image;
estimated quantity of text present in the image;
volume or loudness of associated audio;
time stamp or frame number.

6. The method of claims 3 or 4, wherein the calculation of the covariance matrix from the feature vectors comprises the steps of:

forming a plurality of feature vector matrices from the feature vectors; and
calculating the covariance matrix from the plurality of feature vector matrices, preferably wherein the covariance matrix is calculated by averaging the values of the feature vector matrices.

7. The method of any preceding claim, wherein the set of images comprises a set of thumbnails, wherein each thumbnail corresponds to a full scale image.

8. The method of any preceding claim, wherein a subset of the set of images may be selected to be analysed, preferably wherein the selected subset of images is weighted more heavily than the unselected subset of images in the analysis.

9. The method of any preceding claim, wherein arranging or ordering the set of images comprises creating a two or three dimensional map of the images.

10. The method of any preceding claim, further comprising the step of displaying the images in accordance with the image ordering, on an image display device.

11. The method of any preceding claim, wherein after arranging or sorting the set of images some, or all, of the images may overlap.

12. The method of any preceding claim, wherein only key images of the set of images are displayed.

13. An apparatus configured to perform the method of any of claims 1 to 12.

14. Video apparatus comprising:

an input for receiving at least one set of images;
a video processor for processing images;
a display forming part of a user interface for controlling the video processor; and
an output for processed images;
wherein the video processor is configured for:

measuring for each image a feature value for each of a plurality of image features;
determining over the set of images a correlation measure representing for at least some combinations of the image features the correlation in the respective feature values;
selecting in accordance with said correlation measure at least one closely correlated combination of image features; and
ordering the set of images in accordance with those closely correlated combinations of image features; and

wherein the display is configured to display the images of the set as so ordered.

15. A computer program product comprising program instructions configured to program a processor to perform the method of any of claims 1 to 12.

Figure 1

102

Figure 2

204

302 — Measuring for each image a feature value for each of a plurality of image features

304 — Determining a correlation measure representing for at least some combinations of the image feature values the correlation in respective feature values

306 — Selecting at least one closely correlated combination of image features

308 — Ordering the set of images in accordance with the closely correlated combinations of image features

Figure 3

Figure 4

502 — Calculating a feature vector for each image

504 — Calculating a feature vector matrix for each image

506 — Calculating a covariance matrix for the set of images

508 — Performing singular value decomposition on the covariance matrix

510 — Producing a first unitary matrix, a diagonalised matrix of singular values, and a second unitary matrix

512 — Determining which of the singular values of the diagonalised matrix are highest

514 — Reducing the dimensionality of the first unitary matrix

516 — Reducing the dimensionality of the feature vector matrix of each image using the reduced first unitary matrix

518 — Determining arrangement of the images based on the reduced feature vector matrices

## Figure 5

602 — Measuring for each image a feature value for each of a plurality of image features

604 — Selecting a subset of the set of images and more heavily weighting those images

606 — Determining a correlation measure representing for at least some combinations of the image feature values the correlation in respective feature values

608 — Selecting at least one closely correlated combination of image features

610 — Ordering the set of images in accordance with the closely correlated combinations of image features

Figure 6

701 → 702 calculate feature vectors → 703 → 704 calculate covariance matrix → 705 → 706 singular value decomposition → 707 → 708 dimension reduction → 709 → 710 map to reduced space → 711 → 712 display result → 713

715 → 716 user interaction; 717

Figure 7

Figure 8

Figure 9

Figure 10

EP 3 296 924 A1

Europäisches
Patentamt

European
Patent Office

Office européen
des brevets

**EUROPEAN SEARCH REPORT**

Application Number

EP 17 19 0120

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 02/077870 A2 (INTEL CORP [US]) 3 October 2002 (2002-10-03) * page 5, line 30 - page 6, line 2 * * page 6, line 19 - line 20 * * page 7, line 4 - line 5 * ----- | 1-3,13, 15 | INV. G06K9/00 G06F17/30 |
| A | US 2003/048946 A1 (FOOTE JONATHAN T [US] ET AL) 13 March 2003 (2003-03-13) * abstract * ----- | 1-15 | |

TECHNICAL FIELDS
SEARCHED (IPC)

G06F
G06K

The present search report has been drawn up for all claims

| Place of search | Date of completion of the search | Examiner |
|---|---|---|
| The Hague | 7 February 2018 | Chateau, Jean-Pierre |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons
 
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 17 19 0120

This annex lists the patent family members relating to the patent documents cited in the above-mentioned European search report.
The members are as contained in the European Patent Office EDP file on
The European Patent Office is in no way liable for these particulars which are merely given for the purpose of information.

07-02-2018

| Patent document cited in search report | | Publication date | Patent family member(s) | | Publication date |
|---|---|---|---|---|---|
| WO 02077870 | A2 | 03-10-2002 | AT | 366963 T | 15-08-2007 |
| | | | CN | 1498381 A | 19-05-2004 |
| | | | DE | 60221109 T2 | 13-03-2008 |
| | | | EP | 1370983 A2 | 17-12-2003 |
| | | | HK | 1060634 A1 | 31-08-2007 |
| | | | JP | 4388095 B2 | 24-12-2009 |
| | | | JP | 2004532458 A | 21-10-2004 |
| | | | JP | 2007249981 A | 27-09-2007 |
| | | | KR | 20040005895 A | 16-01-2004 |
| | | | TW | I223779 B | 11-11-2004 |
| | | | US | 2002164075 A1 | 07-11-2002 |
| | | | WO | 02077870 A2 | 03-10-2002 |
| US 2003048946 | A1 | 13-03-2003 | JP | 4254160 B2 | 15-04-2009 |
| | | | JP | 2003163880 A | 06-06-2003 |
| | | | US | 2003048946 A1 | 13-03-2003 |

EPO FORM P0459

For more details about this annex : see Official Journal of the European Patent Office, No. 12/82